(19) Europäisches Patentamt
European Patent Office
Office européen des brevets

(11) **EP 2 001 123 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
*H02P 25/22* (2006.01)    *H02P 29/00* (2006.01)

(21) Anmeldenummer: **07109627.5**

(22) Anmeldetag: **05.06.2007**

(54) **Verfahren zum Betrieb einer dreiphasigen rotierenden elektrischen Maschine sowie Vorrichtung zur Durchführung des Verfahrens**

Method for operating a three-phase rotating electric machine and device for implementing the method

Procédé de fonctionnement d'une machine rotative triphasée électrique et dispositif d'exécution du procédé

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**10.12.2008 Patentblatt 2008/50**

(73) Patentinhaber: **ABB Schweiz AG 5400 Baden (CH)**

(72) Erfinder:
• **Burzanowska, Halina 5417 Untersiggenthal (CH)**
• **Jörg, Pieder 7013 Domat/Ems (CH)**
• **Sario, Petteri 5408 Ennetbaden (CH)**

(74) Vertreter: **ABB Patent Attorneys C/o ABB Schweiz AG Intellectual Property (CH-LC/IP) Brown Boveri Strasse 6 5400 Baden (CH)**

(56) Entgegenhaltungen:
EP-A- 1 521 356    EP-A- 1 553 693
EP-A- 1 722 469    EP-A- 1 732 204

## Beschreibung

### Technisches Gebiet

Die Erfindung bezieht sich auf das Gebiet der Betriebsverfahren dreiphasigen rotierender elektrischer Maschinen. Sie geht aus von einem Verfahren zum Betrieb einer dreiphasigen rotierenden elektrischen Maschine sowie von einer Vorrichtung zur Durchführung des Verfahrens gemäss dem Oberbegriff der unabhängigen Ansprüche.

### Stand der Technik

Vorrichtungen für Verfahren zum Betrieb von dreiphasigen rotierenden elektrischen Maschinen werden heute vermehrt benötigt und eingesetzt. Eine geeignete Vorrichtung ist beispielsweise in der EP 1 521 356 A2 offenbart. Darin ist eine rotierende elektrische Maschine angegeben, welche zwei Statorwicklungssätze aufweist. Weiterhin ist für jeden Statorwicklungssatz zu dessen Speisung jeweils eine zugehörige Umrichtereinheit vorgesehen. Für jede der Umrichtereinheiten ist jeweils eine zugehörige Regelungseinrichtung zur Ansteuerung der zugehörigen Umrichtereinheit mittels eines Ansteuersignals vorgesehen. Ferner sind Messmittel zur Messung der Ströme eines Statorwicklungssatzes vorgesehen, welche gemessenen Ströme der zugehörigen Regelungseinrichtung zugeführt werden, wobei diese Regelungseinrichtung als sogenannter "Master" agiert, d.h. die gemessenen Ströme der "Master"-Regelungseinrichtung der anderen Regelungseinrichtung, welche als sogenannter "Follower" agiert, vorgibt. Die Vorgabe, d.h. die gemessenen Ströme, erfolgt über eine Datenleitung. Auf die von der "Master"-Regelungseinrichtung vorgegebenen Ströme gibt dann die "Follower"-Regelungseinrichtung ein entsprechendes Ansteuersignal an ihre zugehörige Umrichtereinrichtung aus, d.h. das Ansteuersignal der "Follower"-Regelungseinrichtung ist abhängig von der Vorgabe der "Master"-Regelungseinrichtung, welche Vorgabe eine Referenz darstellt.

In der EP 1 732 204 A1 ist ein Verfahren zum Betrieb einer rotierenden elektrischen Maschine angegeben, bei welchem Verfahren der jeweilige Statorwicklungssatz von der zugehörigen Umrichtereinheit gespeist wird. Zur Ermöglichung einer redundanten und unabhängigen Regelung beziehungsweise Beeinflussung elektrischer Grössen der einzelnen Statorwicklungssätze der rotierenden elektrischen Maschine werden die Ströme von mindestens n-1 Phasenwicklungen eines jeden Statorwicklungssatzes gemessen. Für jede Umrichtereinheit ist jeweils eine zugehörige Regelungseinrichtung vorgesehen und jede Umrichtereinheit wird mittels eines Ansteuersignals der zugehörigen Regelungseinrichtung unabhängig von Regelungseinrichtungen der jeweils anderen Umrichtereinheiten angesteuert. Ferner wird das Ansteuersignal in der jeweiligen Regelungseinrichtung aus den gemessenen Strömen eines jeden Statorwicklungssatzes gebildet.

Weiterhin sind die beiden Statorwicklungssätze der rotierenden elektrischen Maschine bei der EP 1 521 356 A2 und bei der EP 1 732 204 A1 typischerweise jeweils in Stern-Schaltung geschaltet, wobei die Stern-Schaltungen der Statorwicklungssätze zueinander 30Grad elektrischen Phasenverschiebung aufweisen (Bezeichnung: YY30). Ein unerwünschtes Phänomen bei einer derartigen rotierenden elektrischen Maschine ist, dass vor allem fünfte und siebte Statorstromoberschwingungen bzgl. der Statorstromgrundschwingung, allgemein aber k-te Statorstromoberschwingungen bzgl. der Statorstromgrundschwingung in beiden Statorwicklungssätzen auftreten, wobei k=6n+/-1 und n=1, 3, 5, ...ist. Diese Statorstromoberschwingungen wirken sich negativ aus und sind damit nicht akzeptabel.

### Darstellung der Erfindung

Aufgabe der Erfindung ist es deshalb, ein Verfahren zum Betrieb einer dreiphasigen rotierenden elektrischen Maschine anzugeben, welches k-te Statorstromoberschwingungen bzgl. der Statorstromgrundschwingung in beiden Statorwicklungssätzen der rotierenden elektrischen Maschine reduziert, wobei k=6n+/-1 und n=1, 3, 5, ...ist. Ferner ist eine Vorrichtung anzugeben, welche sehr einfach, robust und mit einem geringen Schaltungsaufwand realisiert werden kann und mit welcher das Verfahren zum Betrieb in besonders einfacher Weise durchzuführen ist. Diese Aufgaben werden durch die Merkmale des Anspruchs 1 beziehungsweise 7 gelöst. In den abhängigen Ansprüchen sind vorteilhafte Weiterbildungen der Erfindung angegeben.

Die dreiphasige rotierende elektrische Maschine weist zwei Statorwicklungssätze auf, wobei jeder Statorwicklungssatz drei in Sternschaltung geschaltete Phasenwicklungen umfasst und die Stern-Schaltungen der Statorwicklungssätze zueinander 30Grad elektrischen Phasenverschiebung aufweisen und für jeden Statorwicklungssatz jeweils eine zugehörige Umrichtereinheit vorgesehen ist. Beim erfindungsgemässen Verfahren wird nun der jeweilige Statorwicklungssatz von der zugehörigen Umrichtereinheit gespeist, wobei für jede Umrichtereinheit jeweils eine zugehörige Regelungseinrichtung vorgesehen ist und jede Umrichtereinheit mittels eines Ansteuersignals der zugehörigen Regelungseinrichtung unabhängig von Regelungseinrichtungen der jeweils anderen Umrichtereinheiten angesteuert wird. Erfindungsgemäss wird bezüglich der jeweiligen Regelungseinrichtung das Ansteuersignal in der Regelungseinrichtung durch Ausregeln des aktuellen Drehmomentwertes auf einen vorgebbaren Referenzdrehmomentwert und durch Ausregeln des aktuellen Statorflusswertes auf einen Gesamtreferenzstatorflusswert erzeugt und bezüglich der jeweils zugehörigen Regelungseinrichtung der Gesamtreferenzstatorflusswer aus einem vorgebbaren Referenzstatorflusswert und aus einem Differenzstatorflusswert gebildet, wobei der Differenzstatorflusswert aus der Differenz eines ersten Statorflusswertes und eines zweiten Statorflusswertes berechnet wird. Durch die vorstehend genannten Massnahmen des erfindungsgemässen Verfahrens können k-te Statorstromoberschwingungen bzgl. der Statorstromgrundschwingung in beiden Statorwicklungssätzen der rotierenden elektrischen Maschine vorteilhaft reduziert werden, wobei k=6n+/-1 und n=1, 3, 5, ...ist.

Die erfindungsgemässe Vorrichtung zur Durchführung des Verfahrens zum Betrieb einer dreiphasigen rotierenden elektrischen Maschine weist jeweils eine für jeden Statorwicklungssatz zur Speisung vorgesehene zugehörige Umrichtereinheit und jeweils eine für jede Umrichtereinheit vorgesehene zugehörige Regelungseinrichtung zur Ansteuerung der zugehörigen Umrichtereinheit mittels eines Ansteuersignals unabhängig von Regelungseinrichtungen der jeweils anderen Umrichtereinheiten auf. Erfindungsgemäss weist nun jede Regelungseinrichtung eine Reglereinheit zur Ausregelung des zugehörigen aktuellen Drehmomentwertes auf einen vorgebbaren Referenzdrehmomentwert und zur Ausregelung des zugehörigen aktuellen Statorflusswertes auf einen vorgebbaren Referenzstatorflusswert auf, wobei am Ausgang der Reglereinheit das Ansteuersignal anliegt. Jede Regelungseinrichtung weist ferner eine erste Berechnungseinheit zur Bildung des zugehörigen Gesamtreferenzstatorflusswert aus einem vorgebbaren Referenzstatorflusswert und aus einem Differenzstatorflusswert auf. Darüber hinaus weist jede Regelungseinrichtung einen Differenzbildner zur Berechnung des zugehörigen Differenzstatorflusswertes aus der Differenz eines ersten Statorflusswertes und eines zweiten Statorflusswertes auf. Die erfindungsgemässe Vorrichtung ist damit sehr einfach, robust und mit einem geringen Schaltungsaufwand realisierbar, wobei das erfindungsgemässe Verfahren mit der erfindungsgemässen Vorrichtung zudem besonders einfach durchgeführt werden kann. Durch die jeweilige Regelungseinrichtung zur Ansteuerung der zugehörigen Umrichtereinheit unabhängig von Regelungseinrichtungen der jeweils anderen Umrichtereinheiten ist die erfindungsgemässe Vorrichtung redundant aufgebaut, wodurch eine hohe Verfügbarkeit und ein grosses Mass an Wartungsfreundlichkeit des Gesamtsystems ereicht werden kann. Ferner ermöglicht die erfindungsgemässe Vorrichtung zur Durchführung des erfindungsgemässen Verfahrens mittels der Regelungseinrichtungen die k-ten Statorstromoberschwingungen bzgl. der Statorstromgrundschwingung in beiden Statorwicklungssätzen der rotierenden elektrischen Maschine zu reduzieren, wobei k=6n+/-1 und n=1, 3, 5, ...ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1 eine erste Ausführungsform einer erfindungsgemässen Vorrichtung zur Durchführung des erfindungsgemässen Verfahrens zum Betrieb einer rotierenden elektrischen Maschine, insbesondere für eine als Synchronmaschine ausgebildete rotierende elektrische Maschine und

Fig. 2 eine Ausführungsform einer Regelungseinrichtung der Vorrichtung gemäss Fig. 1 für einen Statorwicklungssatz und

Fig. 3 eine Ausführungsform einer Regelungseinrichtung der Vorrichtung gemäss Fig. 1 für einen weiteren Statorwicklungssatz.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

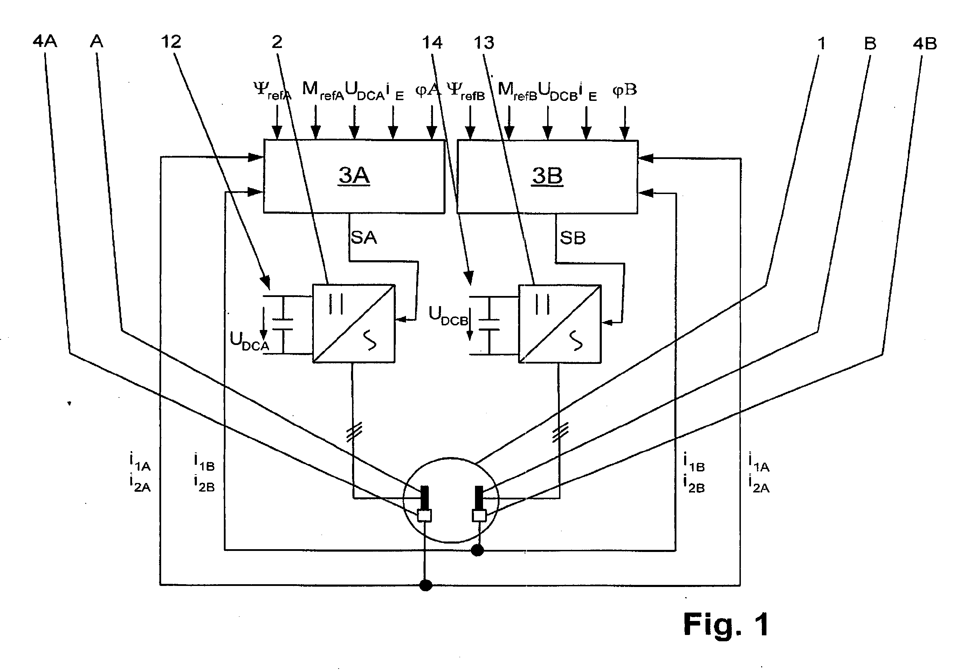

In Fig.1 ist eine erste Ausführungsform einer erfindungsgemässen Vorrichtung zur Durchführung des erfindungsgemässen Verfahrens zum Betrieb einer dreiphasigen rotierenden elektrischen Maschine 1, insbesondere für eine als Synchronmaschine ausgebildete rotierende elektrische Maschine 1, gezeigt. Die Maschine 1 weist zwei Statorwicklungssätze A, B auf, wobei jeder Statorwicklungssatz A, B drei in Sternschaltung geschaltete Phasenwicklungen umfasst und die Stern-Schaltungen der Statorwicklungssätze A, B zueinander 30Grad elektrischen Phasenverschiebung aufweisen und für jeden Statorwicklungssatz A, B jeweils eine zugehörige Umrichtereinheit 2, 13 vorgesehen ist. Der jeweilige Statorwicklungssatz A, B wird von der zugehörigen Umrichtereinheit 2, 13 gespeist. Verfahrensmässig ist für jede Umrichtereinheit 2, 13 jeweils eine zugehörige Regelungseinrichtung 3A, 3B vorgesehen, wobei jede Umrichtereinheit 2, 13 mittels eines Ansteuersignals SA, SB der zugehörigen Regelungseinrichtung 3A, 3B unabhängig von Regelungseinrichtungen 3A, 3B der jeweils anderen Umrichtereinheiten 2, 13 angesteuert wird.

Erfindungsgemäss wird nun bezüglich der jeweiligen Regelungseinrichtung 3A, 3B das Ansteuersignal SA, SB in der Regelungseinrichtung 3A, 3B durch Ausregeln des aktuellen Drehmomentwertes $M_{istA}$, $M_{istB}$ auf einen vorgebbaren Referenzdrehmomentwert $M_{refA}$, $M_{refB}$ und durch Ausregeln des aktuellen Statorflusswertes $\psi_{istA}$ $\psi_{istB}$ auf einen Gesamtreferenzstatorflusswert $\psi_{ref,gesA}$, $\psi_{ref,gesB}$ erzeugt und wiederum bezüglich der jeweiligen Regelungseinrichtung 3A, 3B der Gesamtreferenzstatorflusswert $\psi_{ref, gesA}$, $\psi_{ref, gesB}$ aus einem vorgebbaren Referenzstatorflusswert $\psi_{refA}$, $\psi_{refB}$ und aus einem Differenzstatorflusswert $\psi_{\varepsilon A}$, $\psi_{\varepsilon B}$ gebildet, wobei der Differenzstatorflusswert $\psi_{\varepsilon A}$, $\psi_{\varepsilon B}$ aus der Differenz eines ersten Statorflusswertes $\psi_{1A}$, $\psi_{1B}$ und eines zweiten Statorflusswertes $\psi_{2A}$, $\psi_{2B}$ berechnet wird. Durch die vorstehend genannten Massnahmen des erfindungsgemässen Verfahrens können k-te Statorstromoberschwingungen bzgl. der Statorstromgrundschwingung in beiden Statorwicklungssätzen A, B der rotierenden elektrischen Maschine 1 vorteilhaft reduziert werden wobei k=6n+/-1 und n=1, 3, 5, ...ist.

Verfahrensmässig wird bezüglich der jeweiligen Regelungseinrichtung 3A, 3B der erste Statorflusswert $\psi_{1A}$, $\psi_{1B}$ vorzugsweise aus der Gleichspannung $U_{DCA}$, $U_{DCB}$ eines mit der jeweils zugehörigen Umrichtereinheit 2, 13 verbundenen kapazitiven Energiespeichers 12, 14 gemäss Fig. 1, aus einem ersten Statorstrom $i_{1A}$, $i_{1B}$ des jeweils zugehörigen Statorwicklungssatzes A, B und aus einem zweiten Statorstrom $i_{2A}$, $i_{2B}$ des jeweils zugehörigen Statorwicklungssatzes A, B, insbesondere nach einem Spannungsmodell, gebildet. Weiterhin wird bezüglich der jeweiligen Regelungseinrichtung 3A, 3B der zweite Statorflusswert $\psi_{2A}$, $\psi_{2B}$ aus dem ersten Statorstrom $i_{1A}$, $i_{1B}$ eines jeden Statorwicklungssatzes A, B und aus dem zweiten Statorstrom $i_{2A}$, $i_{2B}$ eines jeden Statorwicklungssatzes A, B, insbesondere nach einem Strommodell, gebildet.

Die Ströme $i_{1A}$, $i_{1B}$, $i_{2A}$, $i_{2B}$ der drei Phasenwicklungen eines jeden Statorwicklungssatzes A, B werden gemäss Fig. 1 mittels Messmitteln 4A, 4B gemessen. Durch die derart gebildeten Statorflusswerte $\psi_{1A}$, $\psi_{1B}$, $\psi_{2A}$, $\psi_{2B}$ und dem daraus gebildeten Differenzstatorflusswert $\psi_{\varepsilon A}$, $\psi_{\varepsilon B}$ lassen sich die vorstehend genannten k-ten Statorstromoberschwingungen bzgl. der Statorstromgrundschwingung in beiden Statorwicklungssätzen A, B der rotierenden elektrischen Maschine 1 in einfachster Weise reduzieren.

Bei einer als Synchronmaschine ausgeführten dreiphasigen rotierenden elektrischen Maschine 1 bezüglich der jeweiligen Regelungseinrichtung 3A, 3B wird der zweite Statorflusswert $\psi_{2A}$, $\psi_{2B}$ zusätzlich aus der Rotorposition φA, φB (Polradposition) und aus dem Erregerstrom $i_E$ gebildet. Ist keine Erregerwicklung, wie beispielsweise bei einer permanentmagneterregten Synchronmaschine, vorhanden, wird kein Erregerstrom $i_E$ für die Bildung des zweiten Statorflusswertes $\psi_2$ benötigt. Es sei erwähnt, dass die Rotorposition φA, φB gemessen werden kann oder eine berechnete Grösse ist. Der Erregerstrom $i_E$ und die Gleichspannung $U_{DCA}$, $U_{DCB}$ des jeweiligen kapazitiven Energiespeichers 12, 14 sind jeweils gemessene Grössen.

Ferner wird bei einer als Synchronmaschine ausgeführten dreiphasigen rotierenden elektrischen Maschine 1 bezüglich der jeweiligen Regelungseinrichtung 3A, 3B der Gesamtreferenzstatorflusswert $\psi_{ref,gesA}$, $\psi_{ref,gesB}$ zusätzlich aus einem Korrekturwert WA, WB gebildet, wobei der Korrekturwert WA, WB von dem vorgebbaren Referenzstatorflusswert $\psi_{refA}$, $\psi_{refB}$, von dem vorgebbaren Referenzdrehmomentwert $M_{refA}$, $M_{refB}$, von der Rotorfrequenz w oder von der Statorfrequenz w abhängig ist.

Die Bildung des Korrekturwertes W allgemein, d.h. ohne die Indizierung der verwendeten Grössen bezüglich der Statorwicklungssätze A, B, erfolgt nach folgender Formel

$$W(\omega, M_{ref}, \psi_{ref}) = \begin{cases} \left(1 - \dfrac{\omega}{\omega_{nom}}\right)^2 \cdot \left(1 + \dfrac{M_{ref}}{M_{max}}\right) & \omega < p \cdot \omega_{nom} \\[2em] \left(1 - \dfrac{p \cdot \omega_{nom}}{\omega_{nom}}\right)^2 \cdot \left(1 + \dfrac{M_{ref}}{M_{max}}\right) & p \cdot \omega_{nom} < \omega < \omega_{nom} \\[2em] \left(1 - \dfrac{p \cdot \omega_{nom}}{\omega_{nom}}\right)^2 \cdot \left(1 + \dfrac{M_{ref}}{M_{max}}\right) \cdot \left(\dfrac{\psi_{nom}}{\psi_{ref}}\right)^{k_2} & \omega > \omega_{nom} \end{cases}$$

wobei ω die Rotorfrequenz bzw. die Statorfrequenz, $\omega_{nom}$ die zugehörige nominale Rotorfrequenz bzw. die nominale Statorfrequenz, $M_{max}$ das maximal zulässige Drehmoment, $\psi_{nom}$ der nominale Statorfluss, p ein erster einstellbarer Gewichtungsparameter und $k_2$ ein zweiter einstellbarer Gewichtungsparameter ist. Die Bildung des Gesamtreferenzstatorflusswertes $\psi_{ref,ges}$ erfolgt dann, ebenfalls ohne die Indizierung der verwendeten Grössen bezüglich der Statorwicklungssätze A, B, nach folgender Formel

$$\psi_{\text{ref,ges}} = \left(\psi_{\varepsilon} \cdot (1-W)\right) + \psi_{\text{ref}}$$

Bezüglich der jeweiligen Regelungseinrichtung 3A, 3B wird der aktuelle Statorflusswert $\psi_{\text{istA}}$, $\psi_{\text{istB}}$ ferner aus dem ersten Statorflusswert $\psi_{1A}$, $\psi_{1B}$, aus dem zweiten Statorflusswert $\psi_{2A}$, $\psi_{2B}$, aus dem Differenzstatorflusswert $\psi_{\varepsilon A}$, $\psi_{\varepsilon B}$ und aus dem Korrekturwert WA, WB gebildet. Desweiteren wird bezüglich der jeweiligen Regelungseinrichtung 3A, 3B der aktuelle Drehmomentwert $M_{\text{istA}}$, $M_{\text{istB}}$ aus dem aktuellen Statorflusswert $\psi_{\text{istA}}$, $\psi_{\text{istB}}$, aus dem ersten Statorstrom $i_{1A}$, $i_{1B}$ des jeweils zugehörigen Statorwicklungssatzes A, B und aus dem zweiten Statorstrom $i_{2A}$, $i_{2B}$ des jeweils zugehörigen Statorwicklungssatzes A, B gebildet.

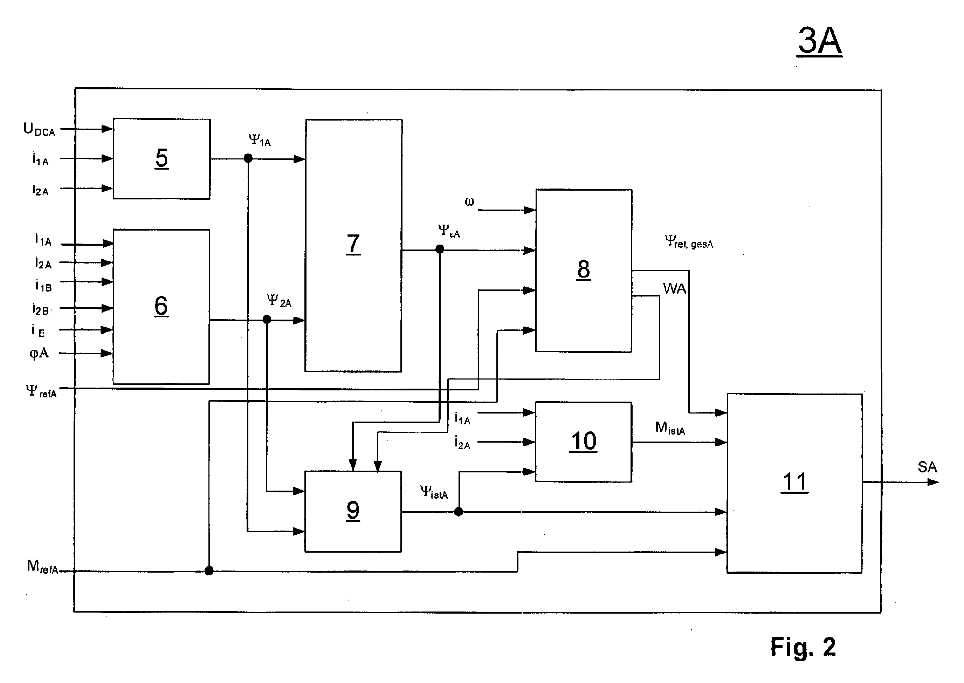

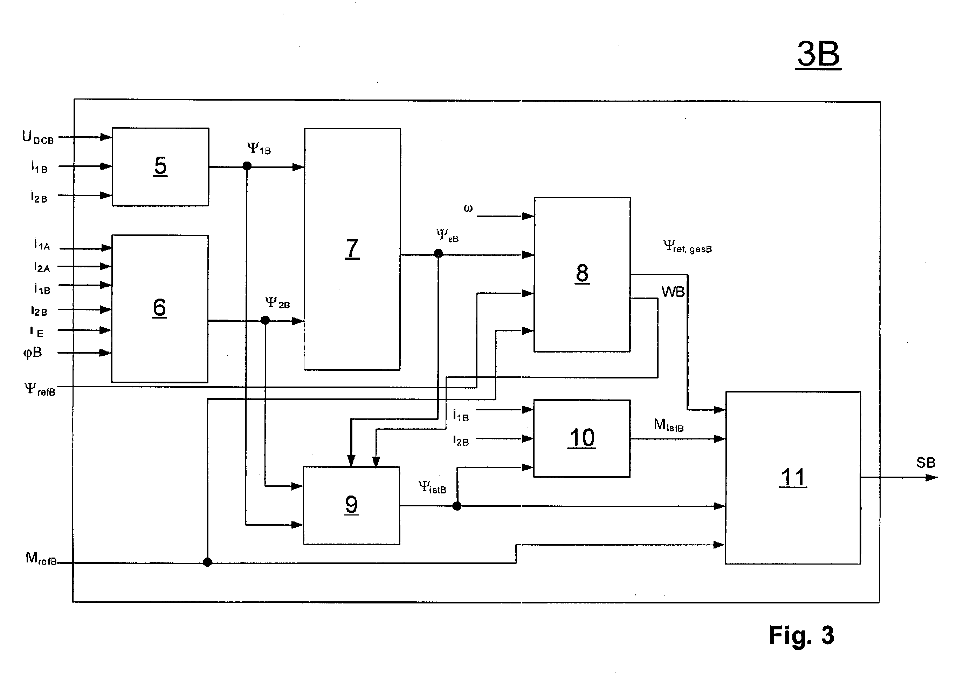

Gemäss Fig. 1 umfasst die erfindungsgemässe Vorrichtung zur Durchführung des vorstehend detailliert beschriebenen erfindungsgemässen Verfahrens jeweils eine für jeden Statorwicklungssatz A, B zur Speisung vorgesehene zugehörige Umrichtereinheit 2, 13 und jeweils eine für jede Umrichtereinheit 2, 13 vorgesehene zugehörige Regelungseinrichtung 3A, 3B zur Ansteuerung der zugehörigen Umrichtereinheit 2, 13 mittels des Ansteuersignals SA, SB unabhängig von Regelungseinrichtungen 3A, 3B der jeweils anderen Umrichtereinheiten 2, 13. Erfindungsgemäss weist jede Regelungseinrichtung 3A, 3B gemäss einer in Fig. 2 und Fig. 3 dargestellten Ausführungsform der Regelungseinrichtung 3A, 3B, insbesondere bezüglich eines zugehörigen Statorwicklungssatzes A, B, der Vorrichtung gemäss Fig. 1 eine Reglereinheit 11 zur Ausregelung des zugehörigen aktuellen Drehmomentwertes $M_{\text{istA}}$, $M_{\text{istB}}$ auf den vorgebbaren Referenzdrehmomentwert $M_{\text{refA}}$, $M_{\text{refB}}$ und zur Ausregelung des zugehörigen aktuellen Statorflusswertes $\psi_{\text{istA}}$, $\psi_{\text{istB}}$ auf den vorgebbaren Referenzstatorflusswert $\psi_{\text{ref, gesA}}$, $\psi_{\text{ref,gesB}}$ auf, wobei am Ausgang der Reglereinheit 11 das Ansteuersignal SA, SB anliegt. Darüber hinaus weist jede Regelungseinrichtung 3A, 3B eine erste Berechnungseinheit 8 zur Bildung des zugehörigen Gesamtreferenzstatorflusswert $\psi_{\text{ref,gesA}}$, $\psi_{\text{ref,gesB}}$ aus dem vorgebbaren Referenzstatorflusswert $\psi_{\text{refA}}$, $\psi_{\text{refB}}$ und aus einem Differenzstatorflusswert $\psi_{\varepsilon A}$, $\psi_{\varepsilon B}$ auf, wobei zudem jede Regelungseinrichtung 3A, 3B einen Differenzbildner 7 zur Berechnung des zugehörigen Differenzstatorflusswertes $\psi_{\varepsilon A}$, $\psi_{\varepsilon B}$ aus der Differenz des ersten Statorflusswertes $\psi_{1A}$, $\psi_{1B}$ und des zweiten Statorflusswertes $\psi_{2A}$, $\psi_{2B}$ aufweist. Die erfindungsgemässe Vorrichtung ist damit denkbar einfach aufgebaut und zu realisieren und sehr robust, wobei das erfindungsgemässe Verfahren mit der erfindungsgemässen Vorrichtung zudem besonders einfach durchgeführt werden kann. Durch die jeweilige Regelungseinrichtung 3A, 3B zur Ansteuerung der jeweils zugehörigen Umrichtereinheit 2, 13 unabhängig von Regelungseinrichtungen 3A, 3B der jeweils anderen Umrichtereinheiten 2, 13 ist die erfindungsgemässe Vorrichtung redundant aufgebaut, woraus eine hohe Verfügbarkeit und ein grosses Mass an Wartungsfreundlichkeit des Gesamtsystems resultiert. Zudem ermöglicht die erfindungsgemässe Vorrichtung zur Durchführung des erfindungsgemässen Verfahrens mittels der Regelungseinrichtungen 3A, 3B die k-ten Statorstromoberschwingungen bzgl. der Statorstromgrundschwingung in beiden Statorwicklungssätzen A, B der rotierenden elektrischen Maschine 1 zu reduzieren, wobei k=6n+/-1 und n=1, 3, 5, ...ist.

Gemäss Fig. 2 und Fig. 3 weist jede Regelungseinrichtung 3A, 3B vorzugsweise eine zweite Berechnungseinheit 5 zur Bildung des zugehörigen ersten Statorflusswertes $\psi_{1A}$, $\psi_{1B}$ aus der Gleichspannung $U_{\text{DCA}}$, $U_{\text{DCB}}$ des mit der jeweils zughörigen Umrichtereinheit 2, 13 verbundenen kapazitiven Energiespeichers 12, 14, aus dem ersten Statorstrom $i_{1A}$, $i_{1B}$ des jeweils zugehörigen Statorwicklungssatzes A, B und aus dem zweiten Statorstrom $i_{2A}$, $i_{2B}$ des jeweils zugehörigen Statorwicklungssatzes A, B auf. Weiterhin weist jede Regelungseinrichtung 3A, 3B gemäss Fig. 2 und Fig. 3 vorteilhaft eine dritte Berechnungseinheit 6 zur Bildung des zugehörigen zweiten Statorflusswertes $\psi_{2A}$, $\psi_{2B}$ aus dem ersten Statorstrom $i_{1A}$, $i_{1B}$ eines jeden Statorwicklungssatzes A, B und aus dem zweiten Statorstrom $i_{2A}$, $i_{2B}$ eines jeden Statorwicklungssatzes A, B auf.

Bei jeder Regelungseinrichtung 3A, 3B bei einer als Synchronmaschine ausgeführten dreiphasigen rotierenden elektrischen Maschine 1 bildet die dritte Berechnungseinheit 6 den zugehörigen zweiten Statorflusswert $\psi_{2A}$, $\psi_{2B}$ zusätzlich aus der Rotorposition $\varphi A$, $\varphi B$ und aus dem Erregerstrom $i_E$, wobei die Rotorposition $\varphi A$, $\varphi B$ und der Erregerstrom $i_E$ der dritten Berechnungseinheit 6 zugeführt ist, insbesondere wie in Fig. 2 und Fig. 3 gezeigt.I

Ferner bildet bei jeder Regelungseinrichtung 3A, 3B bei einer als Synchronmaschine ausgeführten dreiphasigen rotierenden elektrischen Maschine 1 die erste Berechnungseinheit 8 den zugehörigen Gesamtreferenzstatorflusswert $\psi_{\text{ref,gesA}}$, $\psi_{\text{ref,gesB}}$ zusätzlich aus einem Korrekturwert WA, WB, wobei der Korrekturwert WA, WB von dem vorgebbaren Referenzstatorflusswert $\psi_{\text{refA}}$, $\psi_{\text{refB}}$, von dem vorgebbaren Referenzdrehmomentwert $M_{\text{refA}}$, $M_{\text{refB}}$, von der Rotorfrequenz w oder von der Statorfrequenz w abhängig ist und der vorgebbare Referenzstatorflusswert $\Psi_{\text{refA}}$, $\Psi_{\text{refB}}$, der vorgebbare Referenzdrehmomentwert $M_{\text{refA}}$, $M_{\text{refB}}$, die Rotorfrequenz w oder die Statorfrequenz w der ersten Berechnungseinheit 8 zugeführt ist. Die Bildung des jeweiligen Korrekturwertes WA, WB nach vorstehend genannter zugehöriger Formel allgemein für den Korrekturwert W sowie die Bildung des jeweiligen Gesamtreferenzstatorflusswertes $\psi_{\text{ref,gesA}}$, $\psi_{\text{ref,gesB}}$ nach vorstehend genannter zugehöriger Formel allgemein für den Gesamtreferenzstatorflusswertes $\psi_{\text{ref,ges}}$ erfolgt vorteilhaft in der ersten Berechnungseinheit 8.

Gemäss Fig. 2 und Fig. 3 weist jede Regelungseinrichtung 3A, 3B eine vierte Berechnungseinheit 9 zur Bildung des zugehörigen aktuellen Statorflusswertes $\psi_{\text{istA}}$, $\psi_{\text{istB}}$ aus dem ersten Statorflusswert $\psi_{1A}$, $\psi_{1B}$, aus dem zweiten

Statorflusswert $\psi_{2A}$, $\psi_{2B}$, aus dem Differenzstatorflusswert $\psi_{\varepsilon A}$, $\psi_{\varepsilon B}$ und aus dem Korrekturwert WA, WB auf. Zudem weist jede Regelungseinrichtung 3 eine fünfte Berechnungseinheit 10 zur Bildung des zugehörigen aktuellen Statorflusswertes $\psi_{istA}$, $\psi_{istB}$ aus dem ersten Statorflusswert $\psi_{1A}$, $\psi_{1B}$, aus dem zweiten Statorflusswert $\psi_{2A}$, $\psi_{2B}$, aus dem Differenzstatorflusswert $\psi_{\varepsilon A}$, $\psi_{\varepsilon B}$ und aus einem Korrekturwert WA, WB auf.

**Bezugszeichenliste**

| 1 | dreiphasige rotierende elektrische Maschine |
|---|---|
| 2, 13 | Umrichtereinheit |
| 3A, 3B | Regelungseinrichtung |
| 4A, 4B | Messmittel |
| 5 | zweite Berechnungseinheit |
| 6 | dritte Berechnungseinheit |
| 7 | Differenzbildner |
| 8 | erste Berechnungseinheit |
| 9 | vierte Berechnungseinheit |
| 10 | fünfte Berechnungseinheit |
| 11 | Reglereinheit |
| 12, 14 | kapazitiver Energiespeicher |
| A, B | Statorwicklungssätze der rotierenden elektrischen Maschine |

**Patentansprüche**

1. Verfahren zum Betrieb einer dreiphasigen rotierenden elektrischen Maschine (1), welche Maschine (1) zwei Statorwicklungssätze (A, B) aufweist und jeder Statorwicklungssatz (A, B) drei in Sternschaltung geschaltete Phasenwicklungen umfasst und die Stern-Schaltungen der Statorwicklungssätze (A, B) zueinander 30Grad elektrischen Phasenverschiebung aufweisen und für jeden Statorwicklungssatz (A, B) jeweils eine zugehörige Umrichtereinheit (2, 13) vorgesehen ist,
bei dem der jeweilige Statorwicklungssatz (A, B) von der zugehörigen Umrichtereinheit (2, 13) gespeist wird,
bei dem für jede Umrichtereinheit (2, 13) jeweils eine zugehörige Regelungseinrichtung (3A, 3B) vorgesehen ist und jede Umrichtereinheit (2, 13) mittels eines Ansteuersignals (SA, SB) der zugehörigen Regelungseinrichtung (3A, 3B) unabhängig von Regelungseinrichtungen (3A, 3B) der jeweils anderen Umrichtereinheiten (2, 13) angesteuert wird,
**dadurch gekennzeichnet,**
**dass** bezüglich der jeweiligen Regelungseinrichtung (3A, 3B) das Ansteuersignal (SA, SB) in der Regelungseinrichtung (3A, 3B) durch Ausregeln des aktuellen Drehmomentwertes ($M_{istA}$, $M_{istB}$) auf einen vorgebbaren Referenzdrehmomentwert ($M_{refA}$, $M_{refB}$) und durch Ausregeln des aktuellen Statorflusswertes ($\psi_{istA}$ $\psi_{istB}$) auf einen Gesamtreferenzstatorflusswert ($\psi_{ref, gesA}$, $\psi_{ref, gesB}$) erzeugt wird, und
**dass** bezüglich der jeweiligen Regelungseinrichtung (3A, 3B) der Gesamtreferenzstatorflusswert ($\psi_{ref, gesA}$, $\psi_{ref, gesB}$) aus einem vorgebbaren Referenzstatorflusswert ($\psi_{refA}$, $\psi_{refB}$) und aus einem Differenzstatorflusswert ($\psi_{\varepsilon A}$, $\psi_{\varepsilon B}$) gebildet wird, wobei der Differenzstatorflusswert ($\psi_{\varepsilon A}$, $\psi_{\varepsilon B}$) aus der Differenz eines ersten Statorflusswertes ($\psi_{1A}$, $\psi_{1B}$) und eines zweiten Statorflusswertes ($\psi_{2A}$, $\psi_{2B}$) berechnet wird.

2. Verfahren nach Anspruch 1, **dadurch gekennzeichnet, dass** bezüglich der jeweiligen Regelungseinrichtung (3A, 3B) der erste Statorflusswert ($\psi_{1A}$, $\psi_{1B}$) aus der Gleichspannung ($U_{DCA}$, $U_{DCB}$) eines mit der jeweils zugehörigen Umrichtereinheit (2, 13) verbundenen kapazitiven Energiespeichers (12, 14), aus einem ersten Statorstrom ($i_{1A}$, $i_{1B}$) des jeweils zugehörigen Statorwicklungssatzes (A, B) und aus einem zweiten Statorstrom ($i_{2A}$, $i_{2B}$) des jeweils zugehörigen Statorwicklungssatzes (A, B) gebildet wird,
dass bezüglich der jeweiligen Regelungseinrichtung (3A, 3B) der zweite Statorflusswert ($\psi_{2A}$, $\psi_{2B}$) aus dem ersten Statorstrom ($i_{1A}$, $i_{1B}$) eines jeden Statorwicklungssatzes (A, B) und aus dem zweiten Statorstrom ($i_{2A}$, $i_{2B}$) eines jeden Statorwicklungssatzes (A, B) gebildet wird.

3. Verfahren nach Anspruch 2, **dadurch gekennzeichnet, dass** bei einer als Synchronmaschine ausgeführten dreiphasigen rotierenden elektrischen Maschine (1) bezüglich der jeweiligen Regelungseinrichtung (3A, 3B) der zweite Statorflusswert ($\psi_{2A}$, $\psi_{2B}$) zusätzlich aus der Rotorposition ($\varphi A$, ($\varphi B$) und aus dem Erregerstrom ($i_E$) gebildet wird.

4. Verfahren nach einem der Ansprüche 1 bis 3, **dadurch gekennzeichnet, dass** bei einer als Synchronmaschine ausgeführten dreiphasigen rotierenden elektrischen Maschine (1) bezüglich der jeweiligen Regelungseinrichtung (3A, 3B) der Gesamtreferenzstatorflusswert ($\psi_{ref, gesA}$, $\psi_{ref, gesB}$) zusätzlich aus einem Korrekturwert (WA, WB) gebildet wird, wobei der Korrekturwert (WA, WB) von dem vorgebbaren Referenzstatorflusswert ($\psi_{retA}$, $\psi_{refB}$), von dem vorgebbaren Referenzdrehmomentwert ($M_{refA}$, $M_{refB}$), von der Rotorfrequenz (w) oder von der Statorfrequenz (w) abhängig ist.

5. Verfahren nach einem der Ansprüche 1 bis 4, **dadurch gekennzeichnet, dass** bezüglich der jeweiligen Regelungseinrichtung (3A, 3B) der aktuelle Statorflusswert ($\psi_{istA}$, $\psi_{istB}$) aus dem ersten Statorflusswert ($\psi_{1A}$, $\psi_{1B}$), aus dem zweiten Statorflusswert ($\psi_{2A}$, $\psi_{2B}$), aus dem Differenzstatorflusswert ($\psi_{\varepsilon A}$, $\psi_{\varepsilon B}$) und aus einem Korrekturwert (WA, WB) gebildet wird, wobei der Korrekturwert (WA, WB) von dem vorgebbaren Referenzstatorflusswert ($\psi_{refA}$, $\psi_{refB}$), von dem vorgebbaren Referenzdrehmomentwert ($M_{refA}$, $M_{refB}$), von der Rotorfrequenz (w) oder von der Statorfrequenz (w) abhängig ist.

6. Verfahren nach einem der Ansprüche 1 bis 5, **dadurch gekennzeichnet, dass** bezüglich der jeweiligen Regelungseinrichtung (3A, 3B) der aktuelle Drehmomentwert ($M_{istA}$, $M_{istB}$) aus dem aktuellen Statorflusswert ($\psi_{istA}$, $\psi_{istB}$), aus einem ersten Statorstrom ($i_{1A}$, $i_{1B}$) des jeweils zugehörigen Statorwicklungssatzes (A, B) und aus einem zweiten Statorstrom ($i_{2A}$, $i_{2B}$) des jeweils zugehörigen Statorwicklungssatzes (A, B) gebildet wird.

7. Vorrichtung zur Durchführung eines Verfahrens zum Betrieb einer dreiphasigen rotierenden elektrischen Maschine (1), welche Maschine (1) mindestens zwei Statorwicklungssätze (A, B) aufweist und jeder Statorwicklungssatz (A, B) drei in Sternschaltung geschaltete Phasenwicklungen umfasst und die Stern-Schaltungen der Statorwicklungssätze (A, B) zueinander 30Grad elektrischen Phasenverschiebung aufweisen, mit jeweils einer für jeden Statorwicklungssatz (A, B) zur Speisung vorgesehenen zugehörigen Umrichtereinheit (2, 13), und mit jeweils einer für jede Umrichtereinheit (2, 13) vorgesehenen zugehörigen Regelungseinrichtung (3A, 3B) zur Ansteuerung der zugehörigen Umrichtereinheit (2, 13) mittels eines Ansteuersignals (SA, SB) unabhängig von Regelungseinrichtungen (3) der jeweils anderen Umrichtereinheiten (2, 13), **dadurch gekennzeichnet,** **dass** jede Regelungseinrichtung (3A, 3B) eine Reglereinheit (11) zur Ausregelung des zugehörigen aktuellen Drehmomentwertes ($M_{istA}$, $M_{istB}$) auf einen vorgebbaren Referenzdrehmomentwert ($M_{refA}$, $M_{refB}$) und zur Ausregelung des zugehörigen aktuellen Statorflusswertes ($\psi_{istA}$, $\psi_{istB}$) auf einen vorgebbaren Referenzstatorflusswert ($\psi_{ref, gesA}$, $\psi_{ref, gesB}$) aufweist, wobei am Ausgang der Reglereinheit (11) das Ansteuersignal (SA, SB) anliegt, **dass** jede Regelungseinrichtung (3A, 3B) eine erste Berechnungseinheit (8) zur Bindung des zugehörigen Gesamt-referenzstatorflusswert ($\psi_{ref,gesA}$, $\psi_{ref,gesB}$) aus einem vorgebbaren Referenzstatorflusswert ($\psi_{refA}$, $\psi_{refB}$) und aus einem Differenzstatorflusswert ($\psi_{\varepsilon A}$, $\psi_{\varepsilon B}$) aufweist, und **dass** jede Regelungseinrichtung (3A, 3B) einen Differenzbildner (7) zur Berechnung des zugehörigen Differenz-statorflusswertes ($\psi_{\varepsilon A}$, $\psi_{\varepsilon B}$) aus der Differenz eines ersten Statorflusswertes ($\psi_{1A}$, $\psi_{1B}$) und eines zweiten Stator-flusswertes ($\psi_{2A}$, $\psi_{2B}$) aufweist.

8. Vorrichtung nach Anspruch 7, **dadurch gekennzeichnet, dass** jede Regelungseinrichtung (3A, 3B) eine zweite Berechnungseinheit (5) zur Bildung des zugehörigen ersten Statorflusswertes ($\psi_{1A}$, $\psi_{1B}$) aus der Gleichspannung ($U_{DCA}$, $U_{DCB}$) eines mit der jeweils zughörigen Umrichtereinheit (2, 13) verbundenen kapazitiven Energiespeichers (12, 14), aus einem ersten Statorstrom ($i_{1A}$, $i_{1B}$) des jeweils zugehörigen Statorwicklungssatzes (A, B) und aus einem zweiten Statorstrom ($i_{2A}$, $i_{2B}$) des jeweils zugehörigen Statorwicklungssatzes (A, B), dass jede Regelungseinrichtung (3A, 3B) eine dritte Berechnungseinheit (6) zur Bildung des zugehörigen zweiten Statorflusswertes ($\psi_{2A}$, $\psi_{2B}$) aus dem ersten Statorstrom ($i_{1A}$, $i_{1B}$) eines jeden Statorwicklungssatzes (A, B) und aus dem zweiten Statorstrom ($i_{2A}$, $i_{2B}$) eines jeden Statorwicklungssatzes (A, B) aufweist.

9. Vorrichtung nach Anspruch 8, **dadurch gekennzeichnet, dass** bei jeder Regelungseinrichtung (3A, 3B) bei einer als Synchronmaschine ausgeführten dreiphasigen rotierenden elektrischen Maschine (1) die dritte Berechnungseinheit (6) den zugehörigen zweiten Statorflusswert ($\psi_{2A}$, $\psi_{2B}$) zusätzlich aus der Rotorposition ($\varphi A$, $\varphi B$) und aus dem Erregerstrom ($i_E$) bildet, wobei die Rotorposition ($\varphi A$, $\varphi B$) und der Erregerstrom ($i_E$) der dritten Berechnungseinheit (6) zugeführt ist.

10. Vorrichtung nach einem der Ansprüche 7 bis 9, **dadurch gekennzeichnet, dass** bei jeder Regelungseinrichtung (3A, 3B) bei einer als Synchronmaschine ausgeführten dreiphasigen rotierenden elektrische Maschine (1) die erste Berechnungseinheit (8) den zugehörigen Gesamtreferenzstatorflusswert ($\psi_{ref, gesA}$, $\psi_{ref, gesB}$) zusätzlich aus einem Korrekturwert (WA, WB) bildet, wobei der Korrekturwert (WA, WB) von dem vorgebbaren Referenzstatorflusswert ($\psi_{refA}$, $\psi_{refB}$), von dem vorgebbaren Referenzdrehmomentwert ($M_{refA}$, $M_{refB}$), von der Rotorfrequenz ($\omega$) oder von der Statorfrequenz (w) abhängig ist und der vorgebbare Referenzstatorflusswert ($\psi_{refA}$, $\psi_{refB}$), der vorgebbare Referenzdrehmomentwert ($M_{refA}$, $M_{refB}$), die Rotorfrequenz (w) oder die Statorfrequenz (w) der ersten Berechnungseinheit (8) zugeführt ist.

11. Vorrichtung nach einem der Ansprüche 7 bis 10, **dadurch gekennzeichnet, dass** jede Regelungseinrichtung (3A, 3B) eine vierte Berechnungseinheit (9) zur Bildung des zugehörigen aktuellen Statorflusswertes ($\psi_{istA}$, $\psi_{istB}$) aus dem ersten Statorflusswert ($\psi_{1A}$, $\psi_{1B}$), aus dem zweiten Statorflusswert ($\psi_{2A}$, $\psi_{2B}$), aus dem Differenzstatorflusswert ($\psi_{\varepsilon A}$, $\psi_{\varepsilon B}$) und aus einem Korrekturwert (WA, WB) aufweist, wobei der Korrekturwert (WA, WB) von dem vorgebbaren Referenzstatorflusswert ($\psi_{refA}$, $\psi_{refB}$), von dem vorgebbaren Referenzdrehmomentwert ($M_{refA}$, $M_{refB}$), von der Rotorfrequenz (w) oder von der Statorfrequenz (w) abhängig ist

12. Vorrichtung nach einem der Ansprüche 7 bis 11, **dadurch gekennzeichnet, dass** jede Regelungseinrichtung (3A, 3B) eine fünfte Berechnungseinheit (10) zur Bildung des zugehörigen aktuellen Drehmomentwertes ($M_{istA}$, $M_{istB}$) aus dem aktuellen Statorflusswert ($\psi_{istA}$, $\psi_{istB}$), aus einem ersten Statorstrom ($i_{1A}$, $i_{1B}$) des jeweils zugehörigen Statorwicklungssatzes (A, B) und aus einem zweiten Statorstrom ($i_{2A}$, $i_{2B}$) des jeweils zugehörigen Statorwicklungssatzes (A, B) aufweist.

## Claims

1. Method for operation of a three-phase rotating electrical machine (1) which has two stator winding sets (A, B) and each stator winding set (A, B) has three phase windings connected in star, and the star circuits of the stator winding sets (A, B) have a phase shift of 30 degrees electrical with respect to one another, and an associated converting unit (2, 13) is respectively provided for each stator winding set (A, B),
   in which the respective stator winding set (A, B) is fed by the associated converter unit (2, 13),
   in which a respectively associated regulation device (3A, 3B) is provided for each converter unit (2, 13), and each converter unit (2, 13) is driven by means of a drive signal (SA, SB) from the associated regulation device (3A, 3B) independently of regulation devices (3A, 3B) of the respective other converter units (2, 13),
   **characterized**
   **in that,** with regard to the respective regulation device (3A, 3B), the drive signal (SA, SB) is produced in the regulation device (3A, 3B) by regulation of the actual torque value ($M_{actA}$, $M_{actB}$) at a predeterminable reference torque value ($M_{refA}$, $M_{refB}$) and a regulation of the actual stator flux value ($\psi_{actA}$, $\psi_{actB}$) at a total reference stator flux value ($\psi_{ref,\,totA}$, $\psi_{ref,\,totB}$), and in that, with regard to the respective regulation device (3A, 3B), the total reference stator flux value ($\psi_{ref,\,totA}$, $\psi_{ref,\,totB}$) is formed from a predeterminable reference stator flux value ($\psi_{refA}$, $\psi_{refB}$) and from a difference stator flux value ($\psi_{\varepsilon A}$, $\psi_{\varepsilon B}$), with the difference stator flux value ($\psi_{\varepsilon A}$, $\psi_{\varepsilon B}$) being calculated from the difference between a first stator flux value ($\psi_{1A}$, $\psi_{1B}$) and a second stator flux value ($\psi_{2A}$, $\psi_{2B}$).

2. Method according to Claim 1, **characterized in that,** with regard to the respective regulation device (3A, 3B), the first stator flux value ($\psi_{1A}$, $\psi_{1B}$) is formed from the DC voltage ($U_{DCA}$, $U_{DCB}$) of a capacitive energy store (12, 14), which is connected to the respectively associated converter unit (2, 13), from a first stator current ($i_{1A}$, $i_{1B}$) of the respectively associated stator winding set (A, B), and from a second stator current ($i_{2A}$, $i_{2B}$) of the respectively associated stator winding set (A, B),
   **in that**, with regard to the respective regulation device (3A, 3B), the second stator flux value ($\psi_{2A}$, $\psi_{2B}$) is formed from the first stator current ($i_{2A}$, $i_{2B}$) of each stator winding set (A, B) and from the second stator current ($i_{2A}$, $i_{2B}$) of each stator winding set (A, B).

3. Method according to Claim 2, **characterized in that,** for a three-phase rotating electrical machine (1) in the form of a synchronous machine, with regard to the respective regulation device (3A, 3B), the second stator flux value ($\psi_{2A}$, $\psi_{2B}$) is additionally formed from the rotor position ($\varphi A$, $\varphi B$) and from the field current ($i_E$) .

4. Method according to one of Claims 1 to 3, **characterized in that,** for a three-phase rotating electrical machine (1) in the form of a synchronous machine, with regard to the respective regulation device (3A, 3B), the total reference stator flux value ($\psi_{ref,\,totA}$, $\psi_{ref,\,totB}$) is additionally formed from a correction value (WA, WB), with the correction value (WA, WB) being dependent on the predeterminable reference stator flux value ($\psi_{refA}$, $\psi_{refB}$), on the predeterminable reference torque value ($M_{refA}$, $M_{refB}$), on the rotor frequency ($\omega$), or on the stator frequency ($\omega$).

5. Method according to one of Claims 1 to 4, **characterized in that,** with regard to the respective regulation device (3A, 3B), the actual stator flux value ($\psi_{actA}$, $\psi_{actB}$), is formed from the first stator flux value ($\psi_{1A}$, $\psi_{1B}$), from the second stator flux value ($\psi_{2A}$, $\psi_{2B}$), from the difference stator flux value ($\psi_{\varepsilon A}$, $\psi_{\varepsilon B}$) and from a correction value (WA, WB), with the correction value (WA, WB) being dependent on the predeterminable reference stator flux value ($\psi_{refA}$, $\psi_{refB}$), on the predeterminable reference torque value ($M_{refA}$, $M_{refB}$), on the rotor frequency ($\omega$) or on the stator frequency ($\omega$).

6. Method according to one of Claims 1 to 5, **characterized in that,** with regard to the respective regulation device (3A, 3B), the actual torque value ($M_{actA}$, $M_{actB}$), is formed from the actual stator flux value ($\psi_{actA}$, $\psi_{actB}$), from a first stator current ($i_{1A}$, $i_{1B}$) in the respectively associated stator winding set (A, B), and from a second stator current ($i_{2A}$, $i_{2B}$) in the respectively associated stator winding set (A, B).

7. Apparatus for carrying out a method for operation of a three-phase rotating electrical machine (1) which has at least two stator winding sets (A, B) and each stator winding set (A, B) comprises three phase windings connected in star, and the star circuits of the stator winding sets (A, B) have a phase shift of 30 degrees electrical with respect to one another,
in each case having an associated converter unit (2, 13) which is intended to feed each stator winding set (A, B), and in each case having an associated regulation device (3A, 3B), which is provided for each converter unit (2, 13), in order to drive the associated converter unit (2, 13) by means of a drive signal (SA, SB) independently of regulation devices (3) of the respective other converter units (2, 13),
**characterized**
**in that** each regulation device (3A, 3B) has a regulator unit (11) for regulation of the associated current torque value ($M_{actA}$, $M_{actB}$) at a predeterminable reference torque value ($M_{refA}$, $M_{refB}$), and for regulation of the associated actual stator flux value ($\psi_{actA}$, $\psi_{actB}$) at a predeterminable reference stator flux value ($\psi_{ref, totA}$, $\psi_{ref, totB}$), with the drive signal (SA, SB) being produced in the output of the regulator unit (11),
**in that** each regulation device (3A, 3B) has a first calculation unit (8) for formation of the associated total reference stator flux value ($\psi_{ref, totA}$, $\psi_{ref, totB}$) from a predeterminable reference stator flux value ($\psi_{refA}$, $\psi_{refB}$) and from a difference stator flux value ($\psi_{\varepsilon A}$, $\psi_{\varepsilon B}$), and
**in that** each regulation device (3A, 3B) has a subtractor (7) for calculation of the associated difference stator flux value ($\psi_{\varepsilon A}$, $\psi_{\varepsilon B}$) from the difference between a first stator flux value ($\psi_{1A}$, $\psi_{1B}$) and a second stator flux value ($\psi_{2A}$, $\psi_{2B}$).

8. Apparatus according to Claim 7, **characterized in that** each regulation device (3A, 3B) has a second calculation unit (5) for formation of the associated first stator flux value ($\psi_{1A}$, $\psi_{1B}$) from the DC voltage ($U_{DCA}$, $U_{DCB}$) of a capacitive energy store (12, 14) which is connected to the respectively associated converter unit (2, 13), from a first stator current ($i_{1A}$, $i_{1B}$) of the respectively associated stator winding set (A, B) and from a second stator current ($i_{2A}$, $i_{2B}$) of the respectively associated stator winding set (A, B),
**in that** each regulation device (3A, 3B) has a third calculation unit (6) for formation of the associated second stator flux value ($\psi_{2A}$, $\psi_{2B}$) from the first stator current ($i_{1A}$, $i_{1B}$) in each stator winding set (A, B) and from the second stator current ($i_{2A}$, $i_{2B}$) in each stator winding set (A, B).

9. Apparatus according to Claim 8, **characterized in that,** for each regulation device (3A, 3B) in a three-phase rotating electrical machine (1) in the form of a synchronous machine, the third calculation unit (6) additionally forms the associated second stator flux value ($\psi_{2A}$, $\psi_{2B}$) from the rotor position ($\varphi A$, ($\varphi B$) and from the field current ($i_E$), with the rotor position ($\varphi A$, $\varphi B$) and the field current ($i_E$) being supplied to the third calculation unit (6).

10. Apparatus according to one of Claims 7 to 9, **characterized in that,** for each regulation device (3A, 3B) in a three-phase rotating electrical machine (1) in the form of a synchronous machine, the first calculation unit (8) forms the associated total reference stator flux value ($\psi_{ref, totA}$, $\psi_{ref, totB}$) additionally from a correction value (WA, WB), with the correction value (WA, WB) being dependent on the predeterminable reference stator flux value ($\psi_{refA}$, $\psi_{refB}$), on the predeterminable reference torque value ($M_{refA}$, $M_{refB}$), on the rotor frequency ($\omega$) or on the stator frequency ($\omega$), and with the predeterminable reference stator flux value ($\psi_{refA}$, $\psi_{refB}$), the predeterminable reference torque value ($M_{refA}$, $M_{refB}$), the rotor frequency ($\omega$) or the stator frequency ($\omega$) being supplied to the first calculation unit (8).

11. Apparatus according to one of Claims 7 to 10, **characterized in that** each regulation device (3A, 3B) has a fourth calculation unit (9) for formation of the associated actual stator flux value ($\psi_{actA}$, $\psi_{actB}$) from the first stator flux value ($\psi_{1A}$, $\psi_{1B}$), from the second stator flux value ($\psi_{2A}$, $\psi_{2B}$), from the difference stator flux value ($\psi_{\varepsilon A}$, $\psi_{\varepsilon B}$) and from a correction value (WA, WB), with the correction value (WA, WB) being dependent on the predeterminable reference

stator flux value ($\psi_{refA}$, $\psi_{refB}$), on the predeterminable reference torque value ($M_{refA}$, $M_{refB}$), on the rotor frequency ($\omega$) or on the stator frequency ($\omega$).

12. Apparatus according to one of Claims 7 to 11, **characterized in that** each regulation device (3A, 3B) has a fifth calculation unit (10) for formation of the associated actual torque value ($M_{actA}$, $M_{actB}$) from the actual stator flux value ($\psi_{actA}$, $\psi_{actB}$), from a first stator current ($i_{1A}$, $i_{1B}$) in the respectively associated stator winding set (A, B), and from a second stator current ($i_{2A}$, $i_{2B}$) in the respectively associated stator winding set (A, B).

## Revendications

1. Procédé pour faire fonctionner une machine électrique (1) rotative triphasée, laquelle machine (1) présente deux jeux d'enroulements statoriques (A, B) et chaque jeu d'enroulements statoriques (A, B) comprend trois enroulements de phase branchés en étoile et les circuits en étoile des jeux d'enroulements statoriques (A, B) présentent entre eux un déphasage électrique de 30 degrés et une unité de conversion (2, 13) associée est à chaque fois prévue pour chaque jeu d'enroulements statoriques (A, B),
   selon lequel le jeu d'enroulements statoriques (A, B) respectif est alimenté par l'unité de conversion (2, 13) associée,
   selon lequel un dispositif de régulation (3A, 3B) associé est à chaque fois prévu pour chaque unité de conversion (2, 13) et chaque unité de conversion (2, 13) est commandée au moyen d'un signal de commande (SA, SB) du dispositif de régulation (3A, 3B) associé indépendamment des dispositifs de régulation (3A, 3B) des autres unités de conversion (2, 13) respectives,
   **caractérisé en ce**
   **que** concernant le dispositif de régulation (3A, 3B) correspondant, le signal de commande (SA, SB) est généré dans le dispositif de régulation (3A, 3B) par asservissement de la valeur actuelle du couple ($M_{istA}$, $M_{istB}$) sur une valeur de couple de référence ($M_{refA}$, $M_{refB}$) pouvant être prédéfinie et par asservissement de la valeur actuelle du flux statorique ($\psi_{istA}$, $\psi_{istB}$) sur une valeur du flux statorique totale de référence ($\psi_{ref,gesA}$, $\psi_{ref,gesB}$), et
   **que** concernant le dispositif de régulation (3A, 3B) correspondant, la valeur du flux statorique totale de référence ($\psi_{ref,gesA}$, $\psi_{ref,gesB}$) est formée à partir d'une valeur de référence du flux statorique ($\psi_{refA}$, $\psi_{refB}$) pouvant être prédéfinie et à partir d'une valeur différentielle du flux statorique ($\psi_{\varepsilon A}$, $\psi_{\varepsilon B}$), la valeur différentielle du flux statorique ($\psi_{\varepsilon A}$, $\psi_{\varepsilon B}$) étant calculée à partir de la différence entre une première valeur du flux statorique ($\psi_{1A}$, $\psi_{1B}$) et une deuxième valeur du flux statorique ($\psi_{2A}$, $\psi_{2B}$).

2. Procédé selon la revendication 1, **caractérisé en ce que**
   concernant le dispositif de régulation (3A, 3B) correspondant, la première valeur du flux statorique ($\psi_{1A}$, $\psi_{1B}$) est formée à partir de la tension continue ($U_{DCA}$, $U_{DCB}$) d'un accumulateur d'énergie capacitif (12, 14) relié avec l'unité de conversion (2, 13) associée respective, à partir d'un premier courant de stator ($i_{1A}$, $i_{1B}$) du jeu d'enroulements statoriques (A, B) associé respectif et à partir d'un deuxième courant de stator ($i_{2A}$, $i_{2B}$) du jeu d'enroulements statoriques (A, B) associé respectif,
   que concernant le dispositif de régulation (3A, 3B) correspondant, la deuxième valeur du flux statorique ($\psi_{2A}$, $\psi_{2B}$) est formée à partir du premier courant de stator ($i_{1A}$, $i_{1B}$) de chaque jeu d'enroulements statoriques (A, B) et à partir du deuxième courant de stator ($i_{2A}$, $i_{2B}$) de chaque jeu d'enroulements statoriques (A, B).

3. Procédé selon la revendication 2, **caractérisé en ce que** dans le cas d'une machine électrique (1) rotative triphasée réalisée sous la forme d'une machine synchrone, concernant le dispositif de régulation (3A, 3B) correspondant, la deuxième valeur du flux statorique ($\psi_{2A}$, $\psi_{2B}$) est en plus formée à partir de la position du rotor ($\varphi A$, $\varphi B$) et à partir du courant d'excitation ($i_E$).

4. Procédé selon l'une des revendications 1 à 3, **caractérisé en ce que** dans le cas d'une machine électrique (1) rotative triphasée réalisée sous la forme d'une machine synchrone, concernant le dispositif de régulation (3A, 3B) correspondant, la valeur du flux statorique totale de référence ($\psi_{ref,gesA}$, $\psi_{ref,gesB}$) est en plus formée à partir d'une valeur de correction (WA, WB), la valeur de correction (WA, WB) étant dépendante de la valeur de référence du flux statorique ($\psi_{refA}$, $\psi_{refB}$) pouvant être prédéfinie, de la valeur de couple de référence ($M_{refA}$, $M_{refB}$) pouvant être prédéfinie, de la fréquence du rotor ($\omega$) ou de la fréquence du stator ($\omega$).

5. Procédé selon l'une des revendications 1 à 4, **caractérisé en ce que** concernant le dispositif de régulation (3A, 3B) correspondant, la valeur actuelle du flux statorique ($\psi_{istA}$, $\psi_{istB}$) est formée à partir de la première valeur du flux statorique ($\psi_{1A}$, $\psi_{1B}$), de la deuxième valeur du flux statorique ($\psi_{2A}$, $\psi_{2B}$), de la valeur différentielle du flux statorique ($\psi_{\varepsilon A}$, $\psi_{\varepsilon B}$) et d'une valeur de correction (WA, WB), la valeur de correction (WA, WB) étant dépendante de la valeur de référence du flux statorique ($\psi_{refA}$, $\psi_{refB}$) pouvant être prédéfinie, de la valeur de couple de référence ($M_{refA}$, $M_{refB}$) pouvant être prédéfinie, de la fréquence du rotor ($\omega$) ou de la fréquence du stator ($\omega$).

6. Procédé selon l'une des revendications 1 à 5, **caractérisé en ce que** concernant le dispositif de régulation (3A, 3B) correspondant, la valeur actuelle du couple ($M_{istA}$, $M_{istB}$) est formée à partir de la valeur actuelle du flux statorique ($\psi_{istA}$, $\psi_{istB}$), d'un premier courant de stator ($i_{1A}$, $i_{1B}$) du jeu d'enroulements statoriques (A, B) associé respectif et à partir d'un deuxième courant de stator ($i_{2A}$, $i_{2B}$) du jeu d'enroulements statoriques (A, B) associé respectif.

7. Dispositif pour mettre en oeuvre un procédé pour faire fonctionner une machine électrique (1) rotative triphasée, laquelle machine (1) présente au moins deux jeux d'enroulements statoriques (A, B) et chaque jeu d'enroulements statoriques (A, B) comprend trois enroulements de phase branchés en étoile et les circuits en étoile des jeux d'enroulements statoriques (A, B) présentent entre eux un déphasage électrique de 30 degrés, comprenant à chaque fois une unité de conversion (2, 13) associée prévue pour chaque jeu d'enroulements statoriques (A, B) pour l'alimentation, comprenant à chaque fois un dispositif de régulation (3A, 3B) associée prévu pour chaque unité de conversion (2, 13) en vue de commander l'unité de conversion (2, 13) associée au moyen d'un signal de commande (SA, SB) indépendamment des dispositifs de régulation (3) des autres unités de conversion (2, 13) respectives, **caractérisé en ce que** chaque dispositif de régulation (3A, 3B) présente une unité de régulation (11) pour asservir la valeur actuelle du couple ($M_{istA}$, $M_{istB}$) associé sur une valeur de couple de référence ($M_{refA}$, $M_{refB}$) pouvant être prédéfinie et pour asservir la valeur actuelle du flux statorique ($\psi_{istA}$, $\psi_{istB}$) associée sur une valeur du flux statorique de référence ($\psi_{ref,gesA}$, $\psi_{ref,gesB}$) pouvant être prédéfinie, le signal de commande (SA, SB) étant présent à la sortie de l'unité de régulation (11), **que** chaque dispositif de régulation (3A, 3B) présente une première unité de calcul (8) pour former la valeur du flux statorique totale de référence ($\psi_{ref,gesA}$, $\psi_{ref,gesB}$) associée à partir d'une valeur de référence du flux statorique ($\psi_{refA}$, $\psi_{refB}$) pouvant être prédéfinie et à partir d'une valeur différentielle du flux statorique ($\psi_{\varepsilon A}$, $\psi_{\varepsilon B}$), et **que** chaque dispositif de régulation (3A, 3B) présente un différentiateur (7) pour calculer la valeur différentielle du flux statorique ($\psi_{\varepsilon A}$, $\psi_{\varepsilon B}$) associée à partir de la différence entre une première valeur du flux statorique ($\psi_{1A}$, $\psi_{1B}$) et une deuxième valeur du flux statorique ($\psi_{2A}$, $\psi_{2B}$).

8. Dispositif selon la revendication 7, **caractérisé en ce que** chaque dispositif de régulation (3A, 3B) présente une deuxième unité de calcul (5) pour former la première valeur du flux statorique ($\psi_{1A}$, $\psi_{1B}$) associée à partir de la tension continue ($U_{DCA}$, $U_{DCB}$) d'un accumulateur d'énergie capacitif (12, 14) relié avec l'unité de conversion (2, 13) associée respective, à partir d'un premier courant de stator ($i_{1A}$, $i_{1B}$) du jeu d'enroulements statoriques (A, B) associé respectif et à partir d'un deuxième courant de stator ($i_{2A}$, $i_{2B}$) du jeu d'enroulements statoriques (A, B) associé respectif, que chaque dispositif de régulation (3A, 3B) présente une troisième unité de calcul (6) pour former la deuxième valeur du flux statorique ($\psi_{2A}$, $\psi_{2B}$) associée à partir du premier courant de stator ($i_{1A}$, $i_{1B}$) de chaque jeu d'enroulements statoriques (A, B) et à partir du deuxième courant de stator ($i_{2A}$, $i_{2B}$) de chaque jeu d'enroulements statoriques (A, B).

9. Dispositif selon la revendication 8, **caractérisé en ce qu'**avec chaque dispositif de régulation (3A, 3B), dans le cas d'une machine électrique (1) rotative triphasée réalisée sous la forme d'une machine synchrone, la troisième unité de calcul (6) forme la deuxième valeur du flux statorique ($\psi_{2A}$, $\psi_{2B}$) associée en plus à partir de la position du rotor ($\varphi A$, $\varphi B$) et à partir du courant d'excitation ($i_E$), la position du rotor ($\varphi A$, $\varphi B$) et le courant d'excitation ($i_E$) étant acheminés à la troisième unité de calcul (6).

10. Dispositif selon l'une des revendications 7 à 9, **caractérisé en ce qu'**avec chaque dispositif de régulation (3A, 3B), dans le cas d'une machine électrique (1) rotative triphasée réalisé sous la forme d'une machine synchrone, la première unité de calcul (8) forme la valeur du flux statorique totale de référence ($\psi_{ref,gesA}$, $\psi_{ref,gesB}$) associée en plus à partir d'une valeur de correction (WA, WB), la valeur de correction (WA, WB) étant dépendante de la valeur de référence du flux statorique ($\psi_{refA}$, $\psi_{refB}$) pouvant être prédéfinie, de la valeur de couple de référence ($M_{refA}$, $M_{refB}$) pouvant être prédéfinie, de la fréquence du rotor ($\omega$) ou de la fréquence du stator ($\omega$) et la valeur de référence du flux statorique ($\psi_{refA}$, $\psi_{refB}$) pouvant être prédéfinie, la valeur de couple de référence ($M_{refA}$, $M_{refB}$) pouvant être prédéfinie, la fréquence du rotor ($\omega$) ou la fréquence du stator ($\omega$) étant acheminées à la première unité de calcul (8).

11. Dispositif selon l'une des revendications 7 à 10, **caractérisé en ce que** chaque dispositif de régulation (3A, 3B) présente une quatrième unité de calcul (9) pour former la valeur actuelle du flux statorique ($\psi_{istA}$, $\psi_{istB}$) associée à

partir de la première valeur du flux statorique ($\psi_{1A}$, $\psi_{1B}$), de la deuxième valeur du flux statorique ($\psi_{2A}$, $\psi_{2B}$), de la valeur différentielle du flux statorique ($\psi_{\varepsilon A}$, $\psi_{\varepsilon B}$) et d'une valeur de correction (WA, WB), la valeur de correction (WA, WB) étant dépendante de la valeur de référence du flux statorique ($\psi_{refA}$, $\psi_{refB}$) pouvant être prédéfinie, de la valeur de couple de référence ($M_{refA}$, $M_{refB}$) pouvant être prédéfinie, de la fréquence du rotor ($\omega$) ou de la fréquence du stator ($\omega$).

12. Dispositif selon l'une des revendications 7 à 11, **caractérisé en ce que** chaque dispositif de régulation (3A, 3B) présente une cinquième unité de calcul (10) pour former la valeur actuelle du couple ($M_{istA}$, $M_{istB}$) associée à partir de la valeur actuelle du flux statorique ($\psi_{istA}$, $\psi_{istB}$), à partir d'un premier courant de stator ($i_{1A}$, $i_{1B}$) du jeu d'enroulements statoriques (A, B) associé respectif et à partir d'un deuxième courant de stator ($i_{2A}$, $i_{2B}$) du jeu d'enroulements statoriques (A, B) associé respectif.

Fig. 1

EP 2 001 123 B1

**Fig. 2**

EP 2 001 123 B1

EP 2 001 123 B1

Fig. 3

**EP 2 001 123 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1521356 A2
- EP 1732204 A1